# EUROPEAN PATENT APPLICATION

(11) **EP 2 800 181 A1**
(43) Date of publication of application: **05.11.2014**
(21) Application number: 12863711.3
(22) Date of filing: 10.12.2012
(51) Int. Cl.: H01M 8/02, H01M 2/16

(54) **USE OF PROTON EXCHANGE MEMBRANE IN IRON-CHROMIUM LIQUID FLUID BATTERY**

(30) Priority: 29.12.2011 CN 201110449049
(71) Applicant: Ma, Zhiqi, Dalian, Liaoning 116000 (CN)
(72) Inventor: Ma, Zhiqi, Dalian, Liaoning 116000 (CN)
(74) Representative: Eisenführ Speiser
(86) International application number: PCT/CN2012/086301
(87) International publication number: WO 2013/097595

(57) **Abstract**

The present invention regarding the use of proton exchange membranes for Fe/Cr redox cells belongs to the area of flow redox batteries (or flow redox cells). A proton exchange membrane works as a separator between the positive and negative electrodes in Fe/Cr redox flow cell. These proton exchange membranes are perm-selective to hydrogen ions, that is, protons, with Fe3+ permeability ≤ 1200 and 2500 µg Fe³⁺/hr•cm2•M under room temperature and 65 oC respectively. They have the conductivity (to electrolyte) ≥ 0.03 S•cm-1 at room temperature and atmospheric pressure, or the resistivity ≤0.65 Ω•cm2 and 0.32 Ω•cm2under room temperature and 65 oC respectively (for the membrane thickness of 120 µm). The proton exchange membranes are made of sulfonated polyether ether ketone (sPEEK) polymers,sulfonated poly (phthalazinone ether sulfone ketone) (sPPESK) polymers, or others. This modern type of proton exchange membranes, which are usually developed for fuel cells, work as separators between positive and negative electrodes in Fe/Cr redox flow batteries. Unlike Nafion membranes, this type of proton exchange membranes is a kind of polymer membranes based on carbohydrates and has a much lower cost. With comparison to the proton exchange membranes in early years, these membranes have better proton selectivity and conductivity. And, it lowers the production cost of the Fe/Cr redox cell while holding high efficiency of the cell design simultaneously.

## Description

### Technical Field

The present invention regarding the use of proton exchange membranes for Fe/Cr redox cells belongs to the area of flow redox batteries (or flow redox cells).

### Background Art

A liquid redox flow battery (RFB) is a device of energy conversion, in which the electrical energy can be stored in the electrolyte solution during charging and the stored energy can be released back to electricity during discharging. In the RFBs, the electrolyte solution is in a liquid state so that it can be pumped into the battery for energy conversion or stored in tanks, if needed. A RFB system is composed of RFBs, liquid circulating pumps and pipes, electrolyte solution storage tanks, external power supplies and other key components, among which the RFBs are the core components for a whole system. As defined, the RFBs have wide applications in the electrical power systems with their properties. They can be used as efficient storage equipment for peak shaving, power quality, and load following and balancing in the traditional grids. More promisingly they can also function as key equipment systems of energy storage in the future smart grids, for instance, giving smooth outputs of wind and solar energy and other natural resources energy besides of those important functions for the traditional grids.

The RFBs are usually in the form of cell stacks composed of multiple cells with overlapping in series. The stacks can be electrically connected in series or parallel to form larger stack systems. Their numbers and sizes are determined by the detailed applications. Wherein one single cell usually consists of an end-plate, a current collector, a positive electrode, an electrolyte membrane (or ion exchange membrane), a negative electrode, and another current collector and another end-plate, it is a basic conceptual structure for all flow redox cells with the variety of electrochemical reaction couples. As one of such types of RFBs, a Fe/Cr flow battery works in the following mechanism. Firstly, the electrolyte solution with Fe²⁺ (i.e.FeCl₂) is pumped into the positive chamber of the battery while the electrolyte solution with Cr³⁺ (i.e.CrCl₃) is pumped into the negative chamber from the storage tanks. There exists a separator between positive electrode and negative electrode; the separator is a membrane, dense or porous, which separates positive and negative electrolyte solutions and has the role of transporting charge carriers such as protons or other positive/negative ions when the internal current flows through the separator during the cell operation of charging and discharging. As the cell voltage between the two electrodes is over its OCV of around 1.18V for charge with the supply of electricity, the electrochemical reaction takes place and the battery starts charging. Fe²⁺ ions are thus converted to Fe³⁺ ions at the positive electrode while Cr³⁺ ions are converted to Cr²⁺ ions at the negative electrode. Thereafter electrochemical reactions, the electrolyte solutions with more stored energy is cycled back and stored in their own storage tanks respectively. Generally the charging process is the conversion of chemical species via the electrochemical re actions at electrodes with a result of electrical energy stored in the electrolyte solution. On the other hand, when the external load needs energy output, the electrolyte solutions are pumped into the battery from the storage tanks respectively by the same flow transportation method as the above and it starts discharging. In fact, the discharging process is therefore the reversed electrochemical conversion with a result of stored energy released to the external load. With rational design and stable materials, this type of flow batteries is able to achieve much longer operation times under charge and discharge cycling than conversional solid-state batteries.

It can be seen from the paragraph above that an electrolyte membrane plays a key role in a flow battery to some extent dominating its performance. Proton exchange membranes were mostly employed in the research of Fe/Cr redox flow battery by the National Aeronautics and Space Administration (NASA) early in 1970s. Those membranes, however, didn't have good selectivity and their cost was high though their conductivity was large enough. Conductivity and selectivity are a pair of irreconcilable parameters. In addition, the conductivity of proton exchange membranes also depends on the acid concentration in the electrolyte solutions. Higher acid concentration gives larger conductivity and higher corrosivity. The acid concentration also has a great impact on the concentrations of the active species for energy storage in the electrolyte solutions. Some researchers employed cheap porous membranes in their study of Fe/Cr redox flow batteries instead of dense proton exchange membranes in order to reduce the cost further. Porous membranes, however, showed no ion selectivity and gave worse cross mixing of the electrolytes in two chambers of positive and negative electrodes. Thus, it resulted in a big energy loss so the energy efficiency of their flow batteries was only around 70%.

### Summary of Invention

Due to the defects and deficiencies of current RFB technology mentioned above, this invention provided one type of modern and cheap carbon hydrate proton exchange membranes with their use for Fe/Cr redox flow batteries.

The mission of the present invention was carried out with the following measures: proton exchange membranes were chosen to work as the electrolyte separate ors for the cells of Fe/Cr redox flow batteries. Those membranes have the properties of Fe³⁺ permeability ≤ 1200 and 2500 µg Fe³⁺/hr•cm²•M under room temperature and 65 °C respectively. And, they have the conductivity (to electrolyte) ≥ 0.03 S•cm⁻¹ at room temperature and atmospheric pressure, or the resistivity ≤0.65 Ω•cm² and 0.32 Ω•cm² under room temperature and 65 °C respectively (for the membrane thickness of 120 µm).

The said proton exchange membranes are made of sulfonated polyether ether ketone (sPEEK) polymers or sulfonated poly (phthalazinone ether sulfone ketone) (sPPESK) polymers.

For the said proton exchange membranes, their thickness is between 20 ∼ 200 µm.

The said redox flow batteries were referred as to single cells, or stacks consisting of multiple cells.

In the present invention, a single cell was composed of a current collector outside next to an electrode for each side, a positive electrode, a negative electrode, and an anion exchange membrane in between. The positive and negative electrodes were made of porous graphite felt, carbon Felt, carbon cloth, or carbon paper. The electrolyte solutions flew through porous electrodes on the fiber surface of which electrochemical reactions took place and the cycle of charging and discharging was conducted. The operation voltage of a single cell was usually between 0.6 ∼ 1.4 V. The proton exchange membranes used in the present invention have excellent selectivity to proton, that is, selectively permeate H⁺ while the transportation of other cations is negligible. In earlier studies, the cation exchange membranes (i.e. also proton exchange membranes) permeated both proton and other metal cations. It was a trade-off between the selectivity of proton and the membrane conductivity. Thus the performance of those membranes was not good enough for practical applications due to the loss of internal current and storage capacity.

The redox flow battery usually appeared in the shape of cell stack, which was constructed by folding multiple cells over each other in series, to output a larger voltage range for most practical applications. The stack usually had a general manifold passage for each side of all cells. And, the cells were assembled together with every two cells sharing a current collector, that is, a bipolar plate through which the current of the stack was conducted. At the two ends of the stack there was an end current collector plate for each side and a fixture endplate for binding the stack mechanically. Except of the cell at each end, the intermediate cells shared bipolar plates in between. The integrated design of stack would improve the energy density of the system and the capability of the convenient operation. Meanwhile, it allowed the simple and reliable seal design so that the battery system could possibly run at higher pressure if needed.

This invention took advantage of one modern type of proton exchange membranes which have been developed for fuel cells. Unlike Nafion membranes, this type of proton exchange membranes was based on carbohydrates and had much lower cost. Compared with the proton exchange membranes in early years, these membranes gave relative better proton selectivity and conductivity. And, another advantage of using these proton exchange membranes was that it reduced the production cost of this type of flow battery systems while it gave the batteries higher efficiency

### Brief Description of the Drawings

Fig. 1 is illustration of the schematic internal structure of a single cell in the present invention.
Fig. 2 is illustration of the schematic stack in the present invention.

### Detailed Description of the Preferred Embodiments

In the following sessions the present invention will be described in further details with specific examples.

### EXAMPLE 1

One type of anion exchange membranes was made of sulfonated poly (phthalazinone ether sulfone ketone) (sPPESK) polymer, commercially available from market. Their brief preparation process was expressed as follows: 1) the PEEK powder was placed in a reactor for sulfonation reaction under certain conditions with concentrated sulfuric acid; 2) the membranes were fabricated by adequate membrane preparation process, for example, a regular casting method.

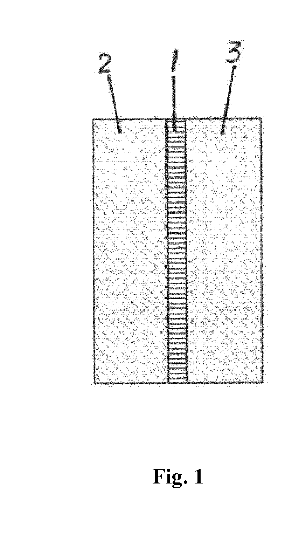

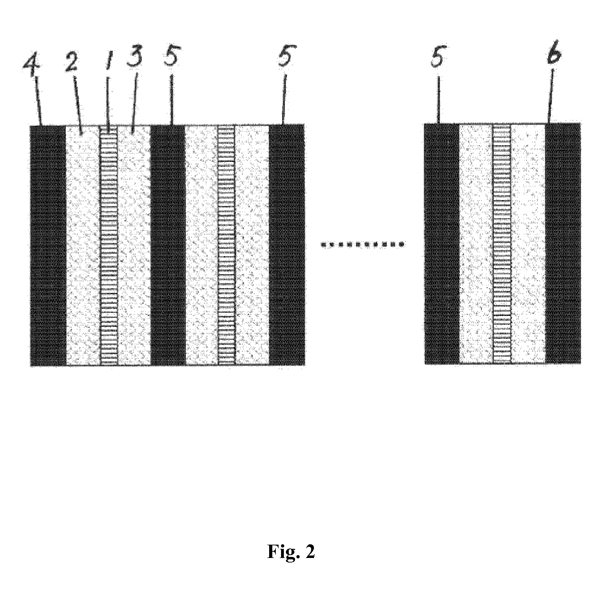

In this example the membrane of sPPESK which was prepared as described above, had been employed in Fe/Cr RFBs. Their internal structure of single cells was illustrated in Fig. 1, where a single cell was composed by a positive electrode (2), a negative electrode (3), and a proton exchange membrane(1) between (2) and (3). The structure of a stack was illustrated in Fig. 2 accordingly, composed of multiple cells with sharing bi-polar plates (5) in between. There existed one fixture end-plate binding a positive current collecting plate (4) and another end-plate binding a negative current collecting plate (6) respectively. Except of the two cells at the two ends, the intermediate cells shared bipolar plates as current collectors in between.

The detailed implementation process is: First cut a membrane foil with the size of 7.5 cm X 7.5 cm, of which the effective surface area is 5 cm X 4 cm, and the remaining area is of sealing area contact with seal gaskets. There are an EPDM rubber seal gaskets and a 3 mm-thick graphite felt at each side of the membrane composing the positive and negative electrodes, in which the central part of the seal gasket is a square hole and can contact directly with the membrane. There is a bi-polar plate outside the two sides of the graphite felt and seal gasket, by which and the suitable fasteners all the layered materials are fixed together to form a single cell. There are liquid inlets and outlets on each bipolar plate. In this example only the single cell measurement was conducted, the composition of the cell stack is according to the method mentioned above. The electrolyte liquid is pumped into the cell through the feeding pump, with the flow of the liquid accurately controlled by certain methods. Heating is carried out by putting a heater in the electrolyte storage tank and the temperature can be adjusted by the temperature controller. Both the charging and discharging process of the battery are controlled by the programmable DC power supply and DC electronic load.

Table 1 shows the comparison of the measured and theoretical estimated values of the proton exchange membranes between the above said membrane sPPESK and the cation membrane (with the code of W285-99, thickness of 175 µm) used by Lewis Research Centre, NASA. The sPPESK membranes were a kind of dense membranes, which were highly selective to permeate and transport H⁺. Moreover, the membranes of sPPESK could be fabricated as thin as 70 µm, with a resistivity of 0.24Ω•cm² accordingly, about 1/5 of the resistivity of NASA membranes. The resistivity decreased significantly as the temperature rose to 65 °C. The membrane performance at different temperatures can also be seen in the table. Therefore, the voltage loss of the cell with the use of sPPESK membranes is much less than that of NASA cell. In addition, the electrolyte solutions between the positive and negative electrodes only mix negligibly so the self-discharging of the battery was reduced significantly. So, the overall energy conversion efficiency would increase significantly to greater than 88 %.

Moreover, Table 1 also gave the effects of membrane thickness on the battery performance. The greater membrane thickness improved the mechanical strength and lifetime of the membrane while the voltage drop on the membrane got a bigger a bit so the voltage efficiency decreased. The overall energy efficiency didn't change much, keeping at a high level, much better than the cell performance reported by NASA.

### EXAMPLE 2

The proton exchange membranes were of sulfonated polyether ether ketone (sPEEK) proton exchange membranes, commercially available from market. Except that the raw polymer of polyether ether ketone was different from that of polyether sulfone ketone in Example 1, the sulfonation of the membrane materials and the membrane fabrication methods were similar to those in Example 1.sPEEK membranes were obtained finally and the battery performance was tested with the same test equipment.

The comparison of the measured and theoretical estimated values of the proton exchange membranes between the above said membrane sPEEK and the cation membrane (with the code of W285-99, thickness of 175 µm) used by Lewis Research Centre, NASA was shown in Table 1. The sPEEK membranes were a kind of dense membrane, which is highly selective and can only transport H⁺ theoretically. However, the resistivity of the 70 µm thick membrane was slightly higher with a value of 0.38 Ω•cm², which was about 1/3 of that of NASA membranes. The resistivity also decreased with the temperature up to 65 °C. Therefore, the voltage loss of the cell with the use of sPEEK membranes was much less than that of NASA cell, and the electrolyte solutions between the positive and negative electrodes only mixed a little, negligibly, which reduces the self-discharging of the battery significantly. So, the overall energy conversion efficiency would rise over 87 %.

**Table 1 Comparison of the performance of Fe/Cr flow batteries with sPPESK and NASA membranes**

| Membrane types | Ion exchange types | thickness (µm) | resistivity (Ω•cm²) | | selectivity (µg Fe³⁺/hr•cm ²•M) | | Couloumb efficiency (%) | Voltage efficiency (%) | Energy efficiency (%) |
|---|---|---|---|---|---|---|---|---|---|
| | | | 20 °C | 65 °C | 20 °C | 65 °C | | | |
| NASA W285-99 membrane | proton | 175 | 1.06 | 0.53 | 1435 | 2900 | 93^{*} | 91^{*} | 85^{*} |
| The membrane in example 1-sPPES K | proton | 70 | 0.24 *** | 0.13^{**} | < 1200 | < 2500 | 93^{**} | 95^{**} | 88^{**} |
| | | 120 | 0.41 | 0.21^{**} | < 1200 | < 2500 | 95^{**} | 94^{**} | 89^{**} |
| | | 150 | 0.51 | 0.26^{**} | < 1200 | < 2500 | 96^{**} | 92^{**} | 88^{**} |

| | | | | | | | | | |
|---|---|---|---|---|---|---|---|---|---|
| *tested at 65 °C, with the optimum current density of 60 mA/cm^{2u} ** tested at 65 °C and atmospheric pressure, the selectivity and energy efficiency were theoretically estimated values *** tested at room temperature. | | | | | | | | | |

**Table 2 Comparison of the performance of Fe/Cr flow batteries with sPEEK and NASA membranes**

| Membrane types | Ion exch ange types | thickness (µm) | resistivity (Ω•cm²) | | selectivity (µg Fe³⁺/hr•c m²•M) | | Couloumb efficiency (%) | Volta ge efficiency (%) | Energy efficiency (%) |
|---|---|---|---|---|---|---|---|---|---|
| | | | 20 °C | 65 °C | 20 °C | 65 °C | | | |
| NASA | proto | 175 | 1.0 | 0.5 | 143 | 290 | 93^{*} | 91^{*} | 85^{*} |
| W285-99 membrane | n | | 6 | 3 | 5 | 0 | | | |
| The membrane in example2-sPEEK | proto n | 70 | 0.38 | 0.19^{**} | < 1200 | < 2500 | 93^{**} | 94^{**} | 87^{**} |
| | | 120 | 0.65 | 0.32^{**} | < 1200 | < 2500 | 95^{**} | 93^{**} | 88^{**} |
| | | 150 | 0.81 | 0.4 ** | < 1200 | < 2500 | 96^{**} | 91^{**} | 87^{**} |

| | | | | | | | | | |
|---|---|---|---|---|---|---|---|---|---|
| * tested at 65 °C, with the best current density of 60 mA/cm^{2u} ** tested at 65 °C and atmospheric pressure, the selectivity and energy efficiency are theoretically estimated values *** tested at room temperature. | | | | | | | | | |

## Claims

1. An application of modern proton exchange membranes in new type of Fe/Cr redox flow batteries, wherein the proton exchange membranes are perm-selective to hydrogen ions, that is, protons, with Fe³⁺permeability ≤ 1200 and 2500 µg Fe³⁺/hr•cm²•M under room temperature and 65 °C respectively. They have the conductivity (to electrolyte) ≥ 0.03 S•cm⁻¹ at room temperature and atmospheric pressure, or the resistivity ≤0.65 Ω•cm² and 0.32 Ω•cm² under room temperature and 65 °C respectively (for the membrane thickness of 120 µm).

2. Application according to Claim 1, wherein the first type of said proton exchange membranes is for fuel cells, it is made of sulfonated polyether ether ketone (sPEEK) polymers.

3. Application according to Claim 1, wherein the second type of said proton exchange membranes is for fuel cells, it is made of sulfonated Poly (phthalazinone ether sulfone ketone) (sPPESK) polymers.

4. Application according to Claims 1 to 3, wherein the said proton exchange membranes are used for Fe/Cr flow batteries, their thickness is required between 20 ∼ 300 µm.

5. Application according to Claims 1 to 3, wherein the said Fe/Cr redox flow batteries are composed of those proton exchange membranes, they are referred as to either single cells or cell stacks by folding multiple cells over each other.
